# EUROPÄISCHE PATENTSCHRIFT

(11) **EP 4 219 204 B1**
(45) Veröffentlichungstag und Bekanntmachung des Hinweises auf die Patenterteilung: **20.08.2025**
(21) Anmeldenummer: 22153972.9
(22) Anmeldetag: 28.01.2022
(51) Int. Cl.: B60J 5/04, B60J 10/86

(54) **INNENSCHWENKTÜR MIT ABDICHTPROFIL UND FAHRZEUG MIT DER INNENSCHWENKTÜR**
INTERNAL PIVOTING DOOR WITH SEALING PROFILE AND VEHICLE WITH THE INTERNAL PIVOTING DOOR
PORTE PIVOTANTE VERS L'INTÉRIEURE À PROFILÉ D'ÉTANCHÉITÉ ET VÉHICULE POURVU DE LA PORTE PIVOTANTE VERS L'INTÉRIEURE

(43) Veröffentlichungstag der Anmeldung: 02.08.2023
(73) Patentinhaber: Gummi-Welz GmbH u. Co. KG Gummi-Kunststofftechnik-Schaumstoffe, 89231 Neu-Ulm (DE)
(72) Erfinder: Grein, Horst, 34637 Schrecksbach (DE); Schumann, Toni, 89233 Neu Ulm (DE)
(74) Vertreter: Ter Meer Steinmeister & Partner

(56) Entgegenhaltungen:
- CN-U- 206 374 534
- JP-A- H11 334 365
- PL-A1- 424 510
- PL-B1- 240 397

## Beschreibung

### TECHNISCHES GEBIET

Die Erfindung betrifft eine Innenschwenktür mit einem Abdichtprofil, insbesondere für ein Fahrzeug. Weiterhin betrifft die Erfindung ein Fahrzeug mit der Innenschwenktür.

### TECHNISCHER HINTERGRUND

Innenschwenktüren sind aus dem Stand der Technik bekannt. Insbesondere werden Innenschwenktüren in Fahrzeugen, beispielsweise in Bussen, eingesetzt. Die Innenschwenktür kann ein Türportal und ein Türblatt umfassen. Das Türblatt einer solchen Innenschwenktür umfasst in der Regel ein Abdichtprofil, das an einem weiteren Abdichtprofil einer weiteren Innenschwenktür oder an dem Türportal anliegt, wenn die Innenschwenktür geschlossen ist. Das Türportal kann ein horizontal verlaufendes Abdichtelement umfassen, das den oberen Bereich der Innenschwenktür überlagert oder diesen Bereich kontaktiert.

Beim Öffnen oder Schließen der Innenschwenktür, d.h. während der Schwenkbewegung, durchfährt ein Abschnitt des Türblatts die von der Tür gebildete Fläche und ragt somit kurzzeitig nach außen. Das bedeutet ein Abschnitt des Türblatts kann über eine Fläche oder Ebene herausragen, die durch das Türblatt und ggf. das Türportal definiert wird, wenn die Innenschwenktür geschlossen ist. Das horizontal verlaufende Abdichtelement des Türportals kann zumindest teilweise und/oder kurzzeitig von dem Türblatt kontaktiert werden, wenn die Innenschwenktür geöffnet oder geschlossen wird, sodass ein Abschnitt des Abdichtprofils des Türblatts an dem horizontal verlaufenden Abdichtelement reibt und dieses nach außen drückt. Durch die Reibung kann das horizontal verlaufende Abdichtelement und/oder das Abdichtprofil des Türblatts relativ schnell verschleißen.
JP H11 334365 A betrifft eine Fahrzeugtürstruktur zum Öffnen und Schließen einer Öffnung einer Fahrzeugkarosserie.

### ZUSAMMENFASSUNG DER OFFENBARUNG

Der Erfindung liegt daher die Aufgabe zu Grunde, eine Innenschwenktür bereitzustellen, durch die ein Verschleiß eines Abdichtprofils eines Türblatts der Innenschwenktür und/oder ein Verschleiß eines horizontal verlaufenden Abdichtelements eines Türportals reduziert oder vermieden wird, wenn die Innenschwenktür geöffnet oder geschlossen wird.

Eine weitere Aufgabe liegt darin, eine Innenschwenktür bereitzustellen, die eine hohe Dichtigkeit aufweist, wenn die Innenschwenktür geschlossen ist.

Eine noch weitere Aufgabe liegt darin, eine Innenschwenktür bereitzustellen, die kostengünstig herstellbar ist.

Zumindest eine der Aufgaben wird durch die Gegenstände der unabhängigen Ansprüche gelöst. Weiterbildungen der Erfindung sind in den abhängigen Ansprüchen definiert.

Offenbart ist eine Innenschwenktür, vorzugsweise eine Innenschwenktür für ein Fahrzeug. Die Innenschwenktür umfasst ein Türblatt und ein Portal. In dem Portal kann das Türblatt eine in einen Innenraum schwenkende Bewegung ausführen, um den Innenraum zu öffnen oder zu schließen. Das Türblatt fährt wenigstens teilweise bei der schwenkenden Bewegung über eine vom Portal und dem Türblatt im geschlossenen Zustand gebildete Fläche hinaus. Das Portal weist ein im oberen Bereich (des Portals) horizontal verlaufendes Abdichtelement auf. Das horizontal verlaufende Abdichtelement überlagert im geschlossenen Zustand der Innenschwenktür einen oberen Bereich des Türblatts. Das Türblatt weist wenigstens ein Türblattelement und wenigstens ein vertikal verlaufendes Abdichtprofil auf. Das vertikal verlaufende Abdichtprofil ist am Türblattelement befestigt. Im geschlossenen Zustand kommt das vertikal verlaufende Abdichtprofil an einem anderen Abdichtprofil, insbesondere an einem anderen vertikal verlaufenden Abdichtprofil, oder an dem Portal zum Anliegen. Das vertikal verlaufende Abdichtprofil weist eine geringere Höhe auf als das Türblattelement. Bei einer schwenkenden Bewegung des Türblatts fährt das vertikal verlaufende Abdichtprofil unter dem horizontal verlaufenden Abdichtelement hindurch, ohne das horizontal verlaufende Abdichtelement zu berühren.

Durch die Ausgestaltung des Türblattelements und des vertikal verlaufenden Abdichtprofils wird eine Reibung zwischen dem vertikal verlaufenden Abdichtprofil und dem horizontal verlaufenden Abdichtelement vermieden, wodurch ein Verschleiß der beiden Elemente reduziert wird.

Unter einer Innenschwenktür kann eine Tür verstanden werden, die zum Öffnen oder Schließen eines Innenraums eine Schwenkbewegung ausführt. Dabei kann zumindest ein Großteil der Tür in den Innenraum verschwenkt werden, wenn die Tür geöffnet wird.

Die Innenschwenktür kann eine einflügelige Innenschwenktür oder eine zweiflügelige Innenschwenktür sein.

Die Innenschwenktür kann eine Innenschwenktür für ein Fahrzeug sein. Das Fahrzeug ist bevorzugt ein Nutzfahrzeug oder ein Personenfahrzeug. Das Fahrzeug kann ein LKW, ein Bus oder ein Zug sein. Besonders bevorzugt ist das Fahrzeug ein Bus. Das Fahrzeug kann ein Fahrstuhl oder eine Gondel, z.B. eine Seilbahngondel, sein. Das Fahrzeug kann ein autonomes Fahrzeug sein. Ein autonomes Fahrzeug kann ohne ein direktes Steuern einer Person betrieben werden und dennoch beispielsweise am Straßenverkehr teilnehmen.

Das Portal kann ein Türportal sein. Das Portal kann bei einem Öffnen und/oder Schließen der Innenschwenktür unbeweglich sein, d.h. das Portal kann seine Position nicht verändern, wenn sich die Innenschwenktür öffnet oder schließt. Das Portal kann mit einem Fahrzeug verbunden sein oder Teil eines Fahrzeugs sein. Das Portal kann ein Rahmen sein.

Der Innenraum kann ein Innenraum eines Fahrzeugs sein. Durch die Innenschwenktür kann der Innenraum geöffnet oder geschlossen werden. Wenn der Innenraum geöffnet ist, kann eine Person (durch die geöffnete Innenschwenktür) in den Innenraum gelangen. Wenn der Innenraum geschlossen ist, kann eine Person nicht (durch die Innenschwenktür) in den Innenraum gelangen, d.h. die Person hat keinen Zugang zu dem Innenraum, wenn die Innenschwenktür geschlossen ist.

Das Türblatt kann ein flächiges Element sein. Das Türblatt kann sich bei einem Öffnen und/oder bei einem Schließen der Innenschwenktür bewegen. Durch das Türblatt kann ein Zugang zu dem Innenraum für eine Person verschlossen sein, wenn die Innenschwenktür geschlossen ist. Ebenso kann durch das Türblatt ein Zugang zu dem Innenraum für eine Person geöffnet sein, wenn die Innenschwenktür geöffnet ist.

Durch das Türblatt und/oder das Portal kann eine Fläche oder Ebene definiert werden, wenn die Innenschwenktür geschlossen ist. In der Fläche oder Ebene kann eine (seitliche) Außenverkleidung des Fahrzeugs liegen. Beispielsweise kann das Türblatt mit der Außenverkleidung des Fahrzeugs, z.B. eines Busses, abschließen, sodass im Wesentlichen eine Fläche aus dem Türblatt und der Außenverkleidung des Fahrzeugs gebildet ist. Die von dem Türblatt und/oder dem Portal definierte Fläche oder Ebene kann bei einem Öffnen oder Schließen der Innenschwenktür von dem Türblatt zumindest teilweise durchstoßen werden. Mit anderen Worten kann zumindest ein Abschnitt des Türblatts über die im geschlossenen Zustand der Innenschwenktür definierte Fläche oder Ebene hinausragen oder durch die Fläche oder Ebene hindurchragen, wenn die Innenschwenktür geöffnet oder geschlossen wird. Die Innenschwenktür kann durch eine Schwenkbewegung des Türblatts geöffnet oder geschlossen werden.

Das horizontal verlaufende Abdichtelement des Portals kann dazu dienen Wasser (z.B. Regenwasser) von dem Türblatt fernzuhalten bzw. auf das Türblatt auftreffendes Wasser zu reduzieren. Alternativ oder zusätzlich kann das horizontal verlaufende Abdichtelement als Sichtschutz dienen. Dazu kann zwischen dem Portal und dem Türblatt ein Luftspalt gebildet sein, der von dem horizontal verlaufenden Abdichtelement überdeckt wird. Das horizontal verlaufenden Abdichtelement kann über die von dem Türblatt im geschlossenen Zustand der Innenschwenktür definierten Fläche oder Ebene hervorstehen oder durch die Fläche oder Ebene hindurchragen um Regenwasser abzufangen bzw. den Eingangsbereich der Innenschwenktür von oben zu schützen.

Das horizontal verlaufende Abdichtelement ist so am Portal befestigt, dass das Türblatt im geschlossenen Zustand wenigstens teilweise an einem inneren Bereich des horizontal verlaufenden Abdichtelements anliegt und von einer Dichtlippe von außen überlagert wird. Das horizontal verlaufende Abdichtelement kann einen Befestigungssockel oder Befestigungsbereich aufweisen, mit dem es in einem Profil (aus beispielsweise Metall) des Portals befestigt ist.

Das horizontal verlaufende Abdichtelement kann sich über die gesamte Breite des Türblatts erstrecken. Ebenso kann sich das horizontal verlaufenden Abdichtelement höchstens abschnittsweise über die Breite des Türblatts erstrecken. Das horizontal verlaufende Abdichtelement kann einstückig oder mehrstückig ausgebildet sein. Die Breite kann sich in horizontaler Richtung erstrecken.

Allgemein können die Begriffe "oben" und "unten" eine Orientierung in Gravitationsrichtung bedeuten. Dabei kann "oben" eine Orientierung entgegen der Gravitationsrichtung bedeuten und/oder "unten" kann eine Orientierung in oder entlang der Gravitationsrichtung bedeuten. "Horizontal" kann eine Orientierung senkrecht zur Gravitationsrichtung bedeuten. "Vertikal" kann eine Orientierung in oder entlang der Gravitationsrichtung bedeuten.

Das horizontal verlaufende Abdichtelement kann ein Elastomer oder Gummi umfassen. Das horizontal verlaufende Abdichtelement kann aus einem Elastomer oder Gummi bestehen. Beispielsweise umfasst das horizontal verlaufende Abdichtelement ein Silikon oder EPDM oder besteht daraus.

Das Türblattelement des Türblatts kann ein starres, unelastisches oder unflexibles Element sein. Das Türblattelement kann einen teilweise oder vollständig umlaufenden Rahmen umfassen. Zusätzlich oder alternativ kann das Türblattelement ein durchsichtiges oder transparentes Element, beispielsweise Glas, umfassen. Das durchsichtige oder transparente Element kann einen Großteil der Fläche des Türblattelements darstellen. Die Fläche des durchsichtigen oder transparenten Elements kann zumindest 50 %, bevorzugt zumindest 60 %, bevorzugter zumindest 70 %, bevorzugter zumindest 80 %, bevorzugter zumindest 90 %, der Fläche des Türblattelements betragen.

Das vertikal verlaufende Abdichtprofil ist mit dem Türblattelement verbunden. Bevorzugt ist das vertikal verlaufende Abdichtprofil an einer Stirnseite des Türblattelements mit dem Türblattelement verbunden. Beispielsweise umfasst das vertikal verlaufende Abdichtprofil einen Vorsprung oder Befestigungssockel oder -fuß, der in eine Nut in dem Türblattelement einbringbar ist, sodass das vertikal verlaufende Abdichtprofil und das Türblattelement miteinander verbunden sind. Ebenso kann das vertikal verlaufende Abdichtprofil mit dem Türblattelement verklebt oder verschraubt sein. Das vertikal verlaufende Abdichtprofil kann auch auf die Stirnseite des Türblattelements aufgesteckt sein und diese beidseitig umfassen.

Das vertikal verlaufende Abdichtprofil kann zumindest zweistückig ausgebildet sein oder genau zweistückig ausgebildet sein. Ein erster Abschnitt des vertikal verlaufenden Abdichtprofils kann einen konstanten Querschnitt aufweisen. Der erste Abschnitt kann einstückig ausgebildet sein und/oder der zweite Abschnitt kann einstückig ausgebildet sein. Auf den ersten Abschnitt des vertikal verlaufenden Abdichtprofils kann ein zweiter Abschnitt aufgesetzt sein, der keinen konstanten Querschnitt aufweist. Der erste Abschnitt kann eine um zumindest zweimal, bevorzugt zumindest dreimal, bevorzugter zumindest viermal, bevorzugter zumindest fünfmal, bevorzugter zumindest siebenmal, bevorzugter zumindest zehnmal, größere Länge (in vertikaler Richtung) aufweisen als der erste Abschnitt des vertikal verlaufenden Abdichtprofils. D.h. der erste Abschnitt bildet den wesentlichen Teil des vertikal verlaufenden Abdichtprofils, wobei der zweite Abschnitt vorzugsweise im oberen Bereich des vertikal verlaufenden Abdichtprofils angeordnet ist, um somit ein oberen Abschluss des vertikal verlaufenden Abdichtprofils zu bilden. Der erste Abschnitt kann mit dem zweiten Abschnitt verbunden sein, beispielsweise durch ein Verklemmen, Verrasten, Vulkanisation, Verkleben oder Verschrauben.

Das vertikal verlaufende Abdichtprofil kann eine Sicherheitsleiste (auch als Sicherheitsprofilleiste bezeichnet) sein. Eine Sicherheitsleiste kann als elastisches Profil zur Abdichtung zwischen dem Türblatt und einem weiteren Türblatt oder zwischen dem Türblatt und dem Portal dienen. Alternativ oder zusätzlich kann die Sicherheitsleiste ein Einklemmen von Objekten, beispielsweise von Menschen oder Gegenständen, zwischen dem Türblatt und dem Portal oder zwischen zwei Türblättern verhindern oder eine Wahrscheinlichkeit eines Einklemmens reduzieren. Dazu können Sicherheitsleisten bspw. eine elektrische Kontaktleiste umfassen, die ein Signal erzeugt, wenn die Sicherheitsleiste auf eine vordefinierte Weise verformt wird. Alternativ oder zusätzlich kann die Sicherheitsleiste eine Sende- oder Empfangseinheit einer Lichtgitteranordnung umfassen.

Das vertikale Abdichtprofil des Türblatts weist eine geringere Höhe auf als das Türblattelement des Türblatts. Mit anderen Worten ist die Erstreckung des vertikalen Abdichtprofils in Gravitationsrichtung (vertikale Richtung) geringer als die Erstreckung des Türblattelements in Gravitationsrichtung (vertikale Richtung).

Bevorzugt beträgt die Höhe des Türblattelements zumindest 0,5 m, bevorzugter zumindest 1,0 m, bevorzugter zumindest 1,5 m, bevorzugter zumindest 1,8 m, bevorzugter zumindest 2,0 m.

Die Höhe des vertikalen Abdichtprofils ist zumindest 5 cm, bevorzugt zumindest 7 cm, bevorzugter zumindest 10 cm, bevorzugter zumindest 12 cm, bevorzugter zumindest 15 cm, bevorzugter zumindest 17 cm, bevorzugter zumindest 20 cm, bevorzugter zumindest 22 cm, bevorzugter zumindest 25 cm, geringer als die Höhe des Türblattelements.

Ein unteres Ende des vertikalen Abdichtprofils kann im Wesentlichen (±10 % oder ±5 %) auf der gleichen Höhe wie ein unteres Ende des Türblattelements angeordnet sein. Mit anderen Worten kann ein unteres Ende des vertikalen Abdichtprofils im Wesentlichen (±10 % oder ±5 %) mit dem unteren Ende des Türblattelements abschließen.

Ein oberes Ende des vertikalen Abdichtprofils kann nicht auf der gleichen Höhe wie ein oberes Ende des Türblattelements angeordnet sein. Mit anderen Worten kann ein oberes Ende des vertikalen Abdichtprofils nicht mit dem oberen Ende des Türblattelements abschließen.

Zwischen einem oberen Ende des vertikalen Abdichtprofils und einem oberen Ende des Türblattelements kann ein Abstand von zumindest 5 cm, bevorzugt zumindest 7 cm, bevorzugter zumindest 10 cm, bevorzugter zumindest 12 cm, bevorzugter zumindest 15 cm, bevorzugter zumindest 17 cm, bevorzugter zumindest 20 cm, bevorzugter zumindest 22 cm, bevorzugter zumindest 25 cm, vorliegen.

Zwischen einem oberen Ende des vertikal verlaufenden Abdichtprofils und einem unteren Ende des horizontal verlaufenden Abdichtelements kann ein Abstand bestehen. Der Abstand kann ein Spalt sein. Der Abstand zwischen dem oberen Ende des vertikal verlaufenden Abdichtprofils und dem unteren Ende des horizontal verlaufenden Abdichtelements kann so gebildet sein, dass das vertikal verlaufende Abdichtprofil nicht mit dem horizontal verlaufenden Abdichtelement überlappt. Der Abstand zwischen dem oberen Ende des vertikal verlaufenden Abdichtprofils und dem unteren Ende des horizontal verlaufenden Abdichtelements kann zumindest 1 mm, bevorzugt zumindest 2 mm, bevorzugter zumindest 3 mm, betragen. Bevorzugt beträgt der Abstand zwischen 2 mm und 6 mm, bevorzugter zwischen 3 mm und 5 mm, bevorzugter etwa 4 mm.

Bevorzugt beträgt die Höhe des vertikal verlaufenden Abdichtprofils zumindest 0,3 m, bevorzugter zumindest 0,8 m, bevorzugter zumindest 1,3 m, bevorzugter zumindest 1,5 m, bevorzugter zumindest 1,6 m, bevorzugter zumindest 1,8 m.

Das vertikal verlaufende Abdichtprofil kann ein Elastomer oder Gummi umfassen. Das vertikal verlaufende Abdichtprofil kann aus einem Elastomer oder Gummi bestehen. Beispielsweise umfasst das vertikal verlaufende Abdichtprofil ein Silikon oder EPDM oder besteht daraus.

Das vertikal verlaufende Abdichtprofil kann durch Extrusion oder Co-Extrusion hergestellt sein oder herstellbar sein.

Die Innenschwenktür kann einen Anschlagbock umfassen. Das horizontal verlaufende Abdichtelement kann eine Abdichtlippe umfassen. Die Abdichtlippe des horizontal verlaufenden Abdichtelements kann an dem Anschlagbock anliegen.

Der Anschlagbock kann ein separates Teil sein, das bevorzugt in das horizontal verlaufende Abdichtelement eingesetzt ist. Dazu kann das horizontal verlaufende Abdichtelement eine Ausnehmung aufweisen, in die der Anschlagbock eingesetzt wird. Der Anschlagbock kann mit dem horizontal verlaufenden Abdichtelement verbunden sein, beispielsweise durch eine Verklebung, eine Verrastung, eine Anvulkanisation, eine Verklemmung oder eine Verschraubung.

Der Anschlagbock kann ein Abschnitt des horizontal verlaufenden Abdichtelements sein. Mit anderen Worten kann der Anschlagbock einstückig mit dem horizontal verlaufenden Abdichtelement ausgebildet sein. Der Anschlagbock kann ein angespritzter Abschnitt sein, der beispielsweise durch Spritzguss oder durch eine Vulkanisation angefügt ist.

Bevorzugt liegt die Abdichtlippe des horizontal verlaufenden Abdichtelements an dem Anschlagbock an, wenn die Innenschwenktür geschlossen ist, d.h. wenn sich die Innenschwenktür in einem geschlossenen Zustand befindet.

Alternativ oder zusätzlich kann die Abdichtlippe des horizontal verlaufenden Abdichtelements an dem Anschlagbock anliegen, wenn die Innenschwenktür geöffnet ist, d.h. wenn sich die Innenschwenktür in einem geöffneten Zustand befindet.

Besonders bevorzugt liegt die Abdichtlippe des horizontal verlaufenden Abdichtelements an dem Anschlagbock an, wenn die Innenschwenktür geschlossen ist und wenn die Innenschwenktür geöffnet ist, d.h. wenn sich die Innenschwenktür in einem geschlossenen Zustand befindet und wenn sich die Innenschwenktür in einem geöffneten Zustand befindet. Die Abdichtlippe kann zusätzlich an dem Anschlagbock anliegen, wenn die Innenschwenktür von dem geöffneten Zustand in den geschlossenen Zustand und/oder von dem geschlossenen Zustand in den geöffneten Zustand übergeht.

Die Abdichtlippe des horizontal verlaufenden Abdichtelements kann sich über die gesamte Länge des horizontal verlaufenden Abdichtelements in horizontaler Richtung erstrecken und somit vorzugsweise die gesamte Breite des Türblatts abdecken. Ebenso kann die Abdichtlippe des horizontal verlaufenden Abdichtelements eine geringere Erstreckung in horizontaler Richtung aufweisen als das horizontal verlaufende Abdichtelement.

Eine Erstreckung des Anschlagbocks in horizontaler Richtung kann geringer sein als eine horizontale Erstreckung des horizontal verlaufenden Abdichtelements und/oder der Abdichtlippe.

Vorzugsweise weist der Anschlagbock eine Breite auf, die im Wesentlichen der Breite des einen oder der zwei vertikalen Abdichtprofilen entspricht. Der Anschlagbock kann auch etwas breiter als das eine oder die zwei vertikalen Abdichtprofile sein.

Die Abdichtlippe kann das vertikal verlaufende Abdichtprofil nicht überlagen oder nicht bedecken. Mit anderen Worten kann die Abdichtlippe vom vertikal verlaufenden Abdichtprofil in vertikaler Richtung beabstandet sein, insbesondere so beabstandet sein, dass ein (Luft)spalt zwischen der Abdichtlippe und dem vertikal verlaufenden Abdichtprofil, insbesondere dem oberen Bereich davon, gebildet ist.

Der Anschlagbock kann einen Anlagebereich aufweisen. An dem Anlagebereich kann die Abdichtlippe des horizontal verlaufenden Abdichtelements im geschlossenen Zustand der Innenschwenktür anliegen. Alternativ oder zusätzlich kann die Abdichtlippe des horizontal verlaufenden Abdichtelements an dem Anlagebereich im geöffneten Zustand der Innenschwenktür anliegen. Die Abdichtlippe des horizontal verlaufenden Abdichtelements kann sowohl im geschlossenen Zustand der Innenschwenktür als auch im geöffneten Zustand der Innenschwenktür an dem Anlagebereich anliegen.

Der Anlagebereich kann ebenflächig ausgebildet sein. Der Anlagebereich kann sich über eine Fläche von zumindest 10 cm², bevorzugt von zumindest 25 cm², bevorzugter von zumindest 50 cm², bevorzugter von zumindest 100 cm², erstrecken.

Der Anlagebereich kann sich über die gesamte Länge des Anschlagbocks in horizontaler Richtung erstrecken. Alternativ kann sich der Anlagebereich über eine geringere Länge in horizontaler Richtung erstrecken als der Anschlagbock.

Der Anschlagbock kann einen flexiblen Abschnitt aufweisen. Der flexible Abschnitt kann sich an den Anlagebereich anschließen und nach unten ragen, insbesondere in Richtung des vertikal verlaufenden Abdichtprofils. Im geschlossenen Zustand der Innenschwenktür kann das vertikal verlaufende Abdichtprofil, insbesondere ein oberer Bereich des vertikal verlaufenden Abdichtprofils, an dem flexiblen Abschnitt anliegen.

Bevorzugt liegt das vertikal verlaufende Abdichtprofil nicht an dem flexiblen Abschnitt an, wenn die Innenschwenktür geöffnet ist, d.h. wenn die Innenschwenktür im geöffneten Zustand vorliegt.

Wenn das vertikal verlaufende Abdichtprofil an dem flexiblen Abschnitt des Anschlagbocks anliegt, kann der flexible Abschnitt elastisch verformt oder komprimiert werden. Dadurch kann eine Abdichtung des Innenraums verbessert werden.

Der Anschlagbock kann zwischen einem linken und einem rechten Bereich des horizontal verlaufenden Abdichtelements eingesetzt sein. "Links" und/oder "rechts" können sich in einer Richtung senkrecht zur Gravitationsrichtung erstrecken. "Links" und/oder "rechts" können sich in horizontaler Richtung erstrecken.

Bevorzugt ist der Anschlagbock bezogen auf die horizontale Erstreckung des horizontal verlaufenden Abdichtelements im Wesentlichen (±10 % oder ±5 %) mittig angeordnet. In diesem Fall können der linke und der rechte Bereich des horizontal verlaufenden Abdichtelements im Wesentlichen (±10 % oder ±5 %) die gleiche Länge in horizontaler Richtung aufweisen.

Insbesondere bei einer einflügeligen Innenschwenktür kann der Anschlagbock in oder an einem Randbereich des horizontal verlaufenden Abdichtelements angeordnet, beispielsweise eingesetzt, sein. Ein Abstand zwischen dem Anschlagbock und einem Rand oder Ende des horizontal verlaufenden Abdichtelements kann kleiner als 30 cm, bevorzugt kleiner als 20 cm, bevorzugter kleiner als 10 cm, bevorzugter kleiner als 5 cm, sein.

Der Anschlagbock kann eine Wasserführungsstruktur aufweisen. Die Wasserführungsstruktur kann im Wesentlichen (±10 % oder ±5 %) horizontal verlaufen. Die Wasserführungsstruktur kann eingerichtet sein, eintretendes Wasser aufzufangen und seitlich vom Anschlagbock abzuleiten bspw. durch eine leichte Neigung.

Wasser (z.B. Regenwasser) kann in der Wasserführungsstruktur aufgefangen werden. Dazu kann der Anschlagbock einen Bereich aufweisen, der eine Vertiefung aufweist. Seitliche Enden, d.h. Enden in horizontaler Richtung, des Anschlagbocks können ausgebildet sein, Wasser aus der Vertiefung aus dem Anschlagbock abzuleiten. Beispielsweise kann zumindest ein seitliches Ende eine Öffnung aufweisen, bevorzugt weisen beide seitliche Enden der Wasserführungsstruktur jeweils eine Öffnung auf. Die Wasserführungsstruktur kann als Rinne oder rinnenartig ausgebildet sein.

Die Wasserführungsstruktur kann in dem flexiblen Abschnitt des Anschlagblocks ausgebildet sein. Der flexible Abschnitt kann sich an den Anlagebereich anschließen und insbesondere nach unten ragen. Somit liegt die Wasserführungsstruktur unterhalb der Anlage der Abdichtlippe und kann Wasser auffangen, welches an der Abdichtlippe des horizontalen Abdichtelements abläuft.

Der Anschlagbock kann zumindest ein seitliches Dichtelement aufweisen. Das seitliche Dichtelement kann zumindest teilweise komprimiert oder verformt sein, wenn die Innenschwenktür geschlossen ist. Bevorzugt umfasst der Anschlagbock zwei seitliche Dichtelemente, wobei jeweils ein seitliches Dichtelement an einem seitlichen Ende (in horizontaler Richtung) des Anschlagbocks angeordnet ist. Im geschlossenen Zustand der Innenschwenktür können beide seitlichen Dichtelemente komprimiert oder verformt sein. Die Komprimierung oder Verformung eines oder beider seitlichen Dichtelemente kann elastisch sein.

Bevorzugt ist das seitliche Dichtelement oder sind die seitlichen Dichtelemente nicht komprimiert oder verformt, wenn die Innenschwenktür geöffnet ist.

Wenn die Innenschwenktür geschlossen ist, kann ein Abschnitt des Türblatts, insbesondere des Türblattelements, an dem seitlichen Dichtelement anliegen und dieses verformen oder komprimieren. Umfasst die Innenschwenktür zwei Türblätter, kann ein Abschnitt jeweils eines Türblatts an jeweils einem seitlichen Dichtelement anliegen und dieses verformen oder komprimieren.

Der Anschlagbock kann einen Kunststoff umfassen oder aus einem Kunststoff bestehen. Der Anschlagbock kann aus dem gleichen Material wie das horizontal verlaufende Abdichtelement bestehen. Ebenso kann der Anschlagbock aus einem Kunststoff bestehen, der härter als das horizontal verlaufende Abdichtelement ist.

Der Anschlagbock kann als Spritzgussteil oder im 3D Druck (additive Fertigung) hergestellt werden.

Das vertikal verlaufende Abdichtprofil kann eine Wassereinfuhrstruktur aufweisen. Bevorzugt weist das vertikal verlaufende Abdichtprofil die Wassereinfuhrstruktur im oberen Bereich auf.

Die Wassereinfuhrstruktur kann eine Öffnung umfassen. Durch die Öffnung kann Wasser in das vertikal verlaufende Abdichtprofil eingeleitet werden. Das vertikal verlaufende Abdichtprofil kann einen Kanal aufweisen, durch den Wasser unten aus dem vertikal verlaufenden Abdichtprofil ausströmen kann. Die Wassereinfuhrstruktur kann eine Vertiefung aufweisen. Am Boden der Vertiefung kann die Öffnung ausgebildet sein. Die Vertiefung kann trichterförmig ausgebildet sein. Die Wassereinfuhrstruktur kann Teil des zweiten Abschnitts des vertikal verlaufenden Abdichtprofils sein.

Das Türblattelement kann Glas umfassen. Das Türblattelement kann zu zumindest 50 Gew.-% aus Glas bestehen. Bevorzugt besteht das Türblattelement zu zumindest 60 Gew.-%, bevorzugter zu zumindest 70 Gew.-%, aus Glas.

Das Türblatt kann mit einem Türblattantrieb gekoppelt sein. Durch den Türblattantrieb kann ein Öffnen und/oder Schließen der Innenschwenktür durchführbar sein. Der Türblattantrieb kann einen Motor, insbesondere einen Elektromotor, umfassen. Ebenso kann der Türblattantrieb ein pneumatisches oder hydraulisches Antriebselement umfassen.

Die Innenschwenktür kann automatisch, bevorzugt halbautomatisch oder vollautomatisch, geöffnet und/oder geschlossen werden.

Das beschriebene Türblatt kann ein erstes Türblatt sein. Das beschriebene Türblattelement kann ein erstes Türblattelement sein. Das beschriebene vertikal verlaufende Abdichtprofil kann ein erstes vertikal verlaufendes Abdichtprofil sein. Die Innenschwenktür kann ein zweites Türblatt mit einem zweiten Türblattelement und einem zweiten vertikal verlaufenden Abdichtprofil umfassen. Das zweite Türblatt kann jedes hierin offenbarte Türblatt sein. Das zweite Türblattelement kann jedes hierin offenbarte Türblattelement sein. Das zweite vertikal verlaufende Abdichtprofil kann jedes hierin offenbart vertikal verlaufende Abdichtprofil sein.

Bevorzugt ist die Innenschwenktür eine zweiflügelige Innenschwenktür.

Offenbart ist ein Fahrzeug mit einer Innenschwenktür. Die Innenschwenktür kann jede hierin offenbarte Innenschwenktür sein. Das Fahrzeug ist bevorzugt ein Nutzfahrzeug oder ein Personenfahrzeug. Das Fahrzeug kann ein LKW, ein Bus oder ein Zug sein. Besonders bevorzugt ist das Fahrzeug ein Bus. Das Fahrzeug kann ein Fahrstuhl oder eine Gondel, z.B. eine Seilbahngondel, sein. Das Fahrzeug kann ein autonomes Fahrzeug sein.

### KURZE BESCHREIBUNG DER FIGUREN

Nachfolgend wird anhand von Figuren die Offenbarung bzw. weitere Ausführungsformen und Vorteile der Offenbarung näher erläutert, wobei die Figuren lediglich Ausführungsbeispiele der Offenbarung beschreiben. Gleiche Bestandteile in den Figuren werden mit gleichen Bezugszeichen versehen. In den Figuren zeigen:
Fig. 1 ein Abdichtelement 160p nach dem Stand der Technik;
Fig. 2 eine Innenschwenktür 100 im geschlossenen Zustand;
Fig. 3 eine Innenschwenktür 100 im geöffneten Zustand;
Fig. 4 eine Innenschwenktür 100 im geschlossenen Zustand;
Fig. 5 eine Innenschwenktür 100 im geöffneten Zustand;
Fig. 6 eine Schnittansicht mit einem Anschlagbock 180;
Fig. 7 eine Schnittansicht mit einem Anschlagbock 180;
Fig. 8 eine perspektivische Ansicht eines Anschlagbocks 180;
Fig. 9 eine Vorderansicht eines Anschlagbocks 180;
Fig. 10 eine Draufsicht eines Anschlagbocks im horizontal verlaufenden Abdichtelement;
Fig. 11 Positionen des ersten Türblatts 120a und des zweiten Türblatts 120b zu unterschiedlichen Zeitpunkten während eines Schließ- oder Öffnungsvorgangs der Innenschwenktür 100;
Fig. 12 einen Ausschnitt einer Innenschwenktür im geschlossenen Zustand in einer Vorderansicht;
Fig. 13 einen Ausschnitt einer Innenschwenktür im geschlossenen Zustand in einer Rückansicht;
Fig. 14 einen Ausschnitt einer Innenschwenktür im geschlossenen Zustand in einer Vorderansicht;
Fig. 15 einen Ausschnitt einer Innenschwenktür 100 in einer Draufsicht.

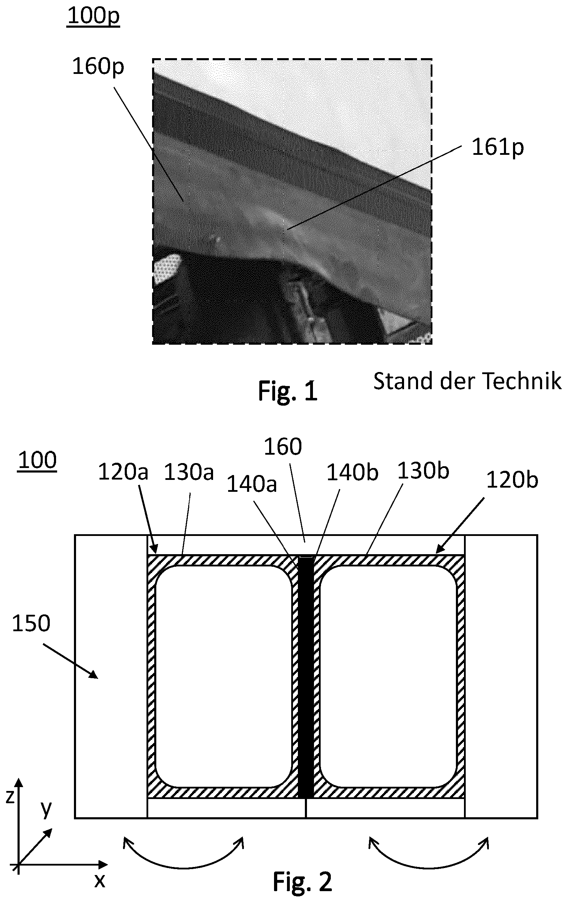

Fig. 1 zeigt einen Ausschnitt einer herkömmlichen Innenschwenktür 100p. Die Innenschwenktür 100p umfasst ein horizontal verlaufendes Abdichtelement 160p. Weiterhin umfasst die Innenschwenktür 100p zwei Türblätter mit jeweils zwei vertikal verlaufenden Abdichtprofilen (nicht in Fig. 1 gezeigt). Bei einem Öffnen der Innenschwenktür 100p führen die Türblätter eine schwenkende Bewegung aus. Bei dieser Bewegung ragt jeweils ein Abschnitt der Türblätter über eine Ebene hinaus, die von den Türblättern definiert wird, wenn die Innenschwenktür 100p geschlossen ist. Durch das Hinausragen der Abschnitte der Türblätter kontaktiert jeweils ein Abschnitt der vertikal verlaufenden Abdichtprofile das horizontal verlaufende Abdichtelement 160p.

Im täglichen Einsatz kann die Innenschwenktür 100p, insbesondere bei Bussen, häufig öffnen und schließen. Durch die wiederholte Kontaktierung und Reibung zwischen den vertikal verlaufenden Abdichtprofilen und dem horizontal verlaufenden Abdichtelement, verschleißt das horizontale Abdichtelement und/oder die vertikal verlaufenden Abdichtprofile relativ schnell.

In Fig. 1 ist eine Ausbeulung 161p zu erkennen, die durch das wiederholte Öffnen und Schließen der Innenschwenktür 100p verursacht ist. Die Ausbeulung 161p ist unerwünscht und führt zu Verschleiß, der ein häufiges Austauschen des horizontal verlaufenden Abdichtelements 160p erfordert bzw. die Abdichtung zwischen den Türblättern und dem horizontal verlaufenden Abdichtelement verschlechtert, was zu Wassereintritt führen kann oder zu Lufteintritt und lauten Fahrgeräuschen.

Fig. 2 zeigt schematisch eine Innenschwenktür 100. Die Innenschwenktür 100 ist als zweiflügelige Innenschwenktür dargestellt und wird im Folgenden als solche beschrieben, die Offenbarung ist jedoch nicht auf eine zweiflügelige Innenschwenktür eingeschränkt, vielmehr sind Ausführungen zu der zweiflügeligen Innenschwenktür analog für eine einflügelige Innenschwenktür gültig.

Die Innenschwenktür 100 umfasst ein erstes Türblatt 120a und ein Portal 150. Weiterhin kann die Innenschwenktür 100 ein zweites Türblatt 120b umfassen. Das Portal 150 ist bspw. als Metallrahmen ausgebildet und/oder am Fahrzeug-Chassis befestigt. Das Portal umfasst u.a. ein horizontal verlaufendes Abdichtelement 160 im oberen Bereich des Portals. Das horizontal verlaufende Abdichtelement 160 ragt in vertikaler Richtung (in Gravitationsrichtung) über ein oberes Ende des ersten und/oder zweiten Türblatts 120a, 120b hinaus. Mit anderen Worten überlagert oder bedeckt das horizontal verlaufende Abdichtelement 160 einen oberen Abschnitt des ersten und/oder zweiten Türblatts 120a, 120b.

In dem Portal können das erste und/oder das zweite Türblatt 120a, 120b so gelagert sein, dass diese eine schwenkende Bewegung ausführen können (angedeutet durch die gebogenen Doppelpfeile).

Das erste Türblatt 120a umfasst ein erstes Türblattelement 130a und ein erstes vertikal verlaufendes Abdichtprofil 140a. Das Türblattelement 130a kann ein durchsichtiges oder transparentes Element, z.B. Glas, umfassen. Das durchsichtige oder transparente Element kann einen Großteil (mehr als 50 %) der Fläche des ersten Türblattelements 130a ausmachen. Das Türblattelement 130a kann einen Rahmen umfassen. In dem Rahmen kann das durchsichtige oder transparente Element gehalten werden. Das vertikal verlaufende Abdichtprofil 140a kann an einer Stirnseite des Türblattelements 130a befestigt sein. Das vertikal verlaufende Abdichtprofil 140a weist eine geringere Höhe auf als das Türblattelement 130a.

Das zweite Türblatt 120b kann analog zu dem ersten Türblatt 120a ausgestaltet sein. Das zweite Türblatt 120b umfasst ein zweites Türblattelement 130b und ein zweites vertikal verlaufendes Abdichtprofil 140b.

In Fig. 2 ist die Innenschwenktür 100 geschlossen. In diesem Zustand kontaktiert das erste vertikale Abdichtprofil 140a das zweite vertikale Abdichtprofil 140b. Wenn die Innenschwenktür 100 einflügelig ist, also nur ein Türblatt 120a umfasst, kann das vertikal verlaufende Abdichtprofil 140a das Portal 150 kontaktieren, wenn die Innenschwenktür 100 geschlossen ist.

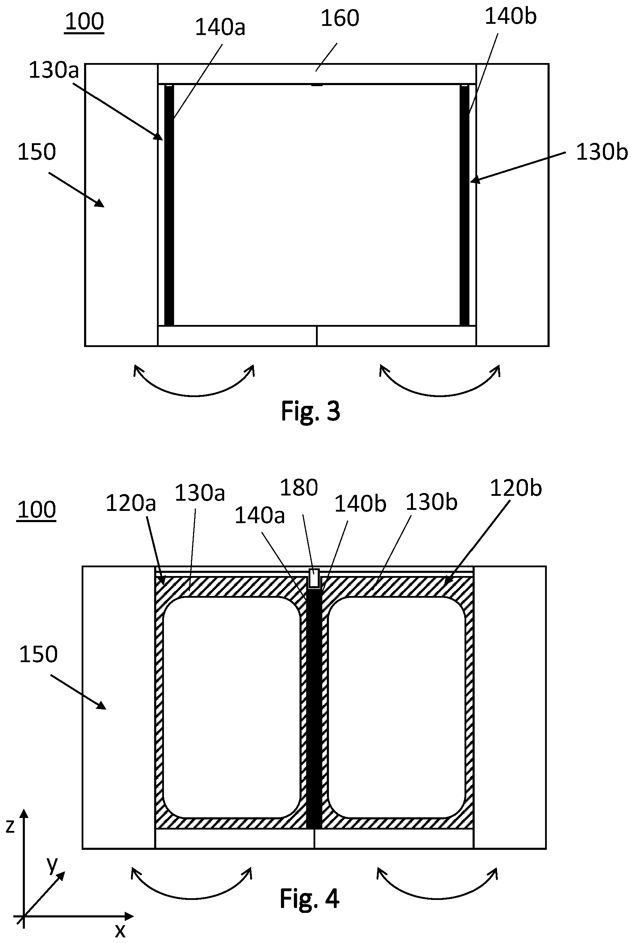

Fig. 3 zeigt die Innenschwenktür 100 im geöffneten Zustand. Das erste Türblatt 120a und das zweite Türblatt 120b haben eine schwenkende Bewegung durchgeführt, sodass ein Großteil des ersten Türblatts 120a und des zweiten Türblatts 120b in einen Innenraum hineinragt. Der Innenraum wird hier mit Blick auf Fig. 3 als hinter dem Portal 150 liegender Raum verstanden.

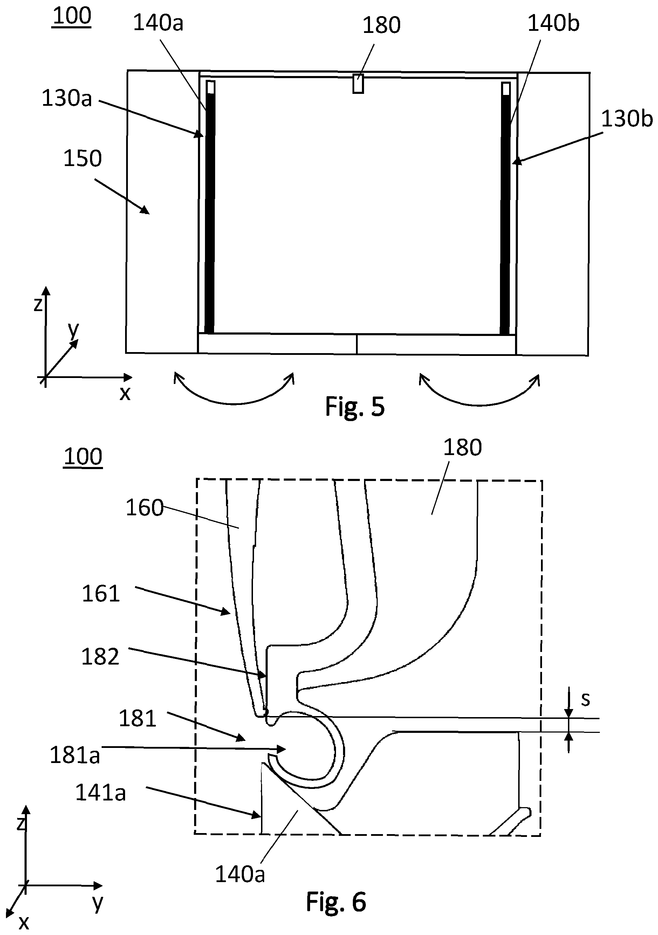

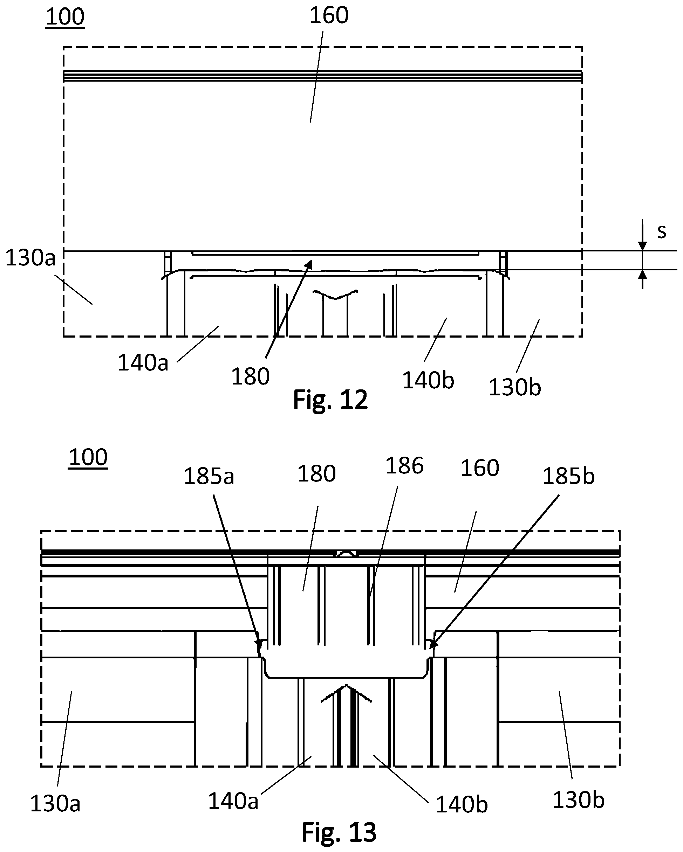

Wie in Figs. 2 und 3 angedeutet, besteht zwischen dem oberen Ende des ersten vertikal verlaufenden Abdichtprofils 140a und einem unteren Ende des horizontal verlaufenden Abdichtelements 160 ein Abstand s (siehe Figs. 6 und 12). Der Abstand s führt zu einem Spalt zwischen dem ersten vertikal verlaufenden Abdichtprofil 140a und dem horizontal verlaufenden Abdichtelement 160. Wenn die Innenschwenktür 100 öffnet, kann das erste vertikal verlaufende Abdichtprofil 140a unter dem horizontal verlaufenden Abdichtelement 160 verfahren, ohne das horizontal verlaufende Abdichtelement 160 zu kontaktieren. Dabei kann ein Abschnitt des vertikal verlaufenden Abdichtprofils 140a eine Ebene oder Fläche, die von zumindest dem ersten Türblatt 120a im geschlossenen Zustand der Innenschwenktür 100 definiert wird, durchstoßen oder hindurchragen. Dies ist analog für das zweite Türblatt 120b gültig. Der Abstand s beträgt vorzugsweise 2-6 mm.

In Fig. 4 ist eine Innenschwenktür 100 wie in Fig. 2 dargestellt, d.h. in einem geschlossenen Zustand, wobei in Fig. 4 das horizontal verlaufende Abdichtelement 160 nicht dargestellt ist.

In Fig. 5 ist die Innenschwenktür 100 wie in Fig. 3 dargestellt, d.h. in einem geöffneten Zustand, wobei in Fig. 5 das horizontal verlaufende Abdichtelement 160 nicht dargestellt ist.

Die Innenschwenktür 100 kann einen Anschlagbock 180 umfassen. Der Anschlagbock 180 kann größtenteils von dem horizontal verlaufenden Abdichtelement 160 verdeckt oder überlagert sein (siehe Figs. 2 und 3). Um den Anschlagbock 180 in Fig. 4 und 5 sichtbar zu machen, ist das horizontal verlaufende Abdichtelement 160 teilweise nicht dargestellt.

Der Anschlagbock 180 kann in das horizontal verlaufende Abdichtelement 160 eingesetzt sein. Beispielsweise kann das horizontal verlaufende Abdichtelement 160 eine Ausnehmung aufweisen, in die der Anschlagbock 180 eingesetzt ist. Ebenso kann der Anschlagbock 180 einstückig mit dem horizontal verlaufenden Abdichtelement 160 ausgeführt sein. Der Anschlagbock 180 kann aus dem gleichen Material bestehen wie das horizontal verlaufende Abdichtelement 160.

Der Anschlagbock 180 kann im Wesentlichen (±10 % oder ±5 %) mittig in dem horizontal verlaufenden Abdichtelement 160 angeordnet oder ausgebildet sein. Mittig bezieht sich hierbei auf die Erstreckung des horizontal verlaufenden Abdichtelements 160 in horizontaler Richtung. Wenn die Innenschwenktür 100 eine einflügelige Innenschwenktür ist, kann der Anschlagbock 180 in einem Randbereich des horizontal verlaufenden Abdichtelements 160 angeordnet oder ausgebildet sein, d.h. in dem Bereich, in dem sich das vertikal verlaufende Abdichtprofil befindet.

Fig. 6 zeigt einen Ausschnitt einer Schnittansicht der Innenschwenktür 100. In dem Ausschnitt ist ein Abschnitt des Anschlagbocks 180, ein Abschnitt des horizontal verlaufenden Abdichtprofils 160 und ein Abschnitt des vertikal verlaufenden Abdichtprofils 140a dargestellt.

Das horizontal verlaufende Abdichtprofil 160 kann eine Abdichtlippe 161 aufweisen. Die Abdichtlippe 161 kann nach unten ragen (in Gravitationsrichtung). Mit zunehmender Erstreckung nach unten kann die Dicke der Abdichtlippe 161 abnehmen. Die Abdichtlippe 161 kann vollständig oder zumindest abschnittsweise nach innen gebogen sein. Insbesondere ist die Abdichtlippe 161 in Richtung des Anschlagbocks 180 gebogen. Die Abdichtlippe 161 kann sich zumindest abschnittsweise über eine Fläche oder Ebene erstrecken, die von dem Türblatt 120a und/oder dem Türblatt 120b im geschlossenen Zustand der Innenschwenktür 100 definiert wird.

Der Anschlagbock 180 kann einen Anlagebereich 182 aufweisen. Der Anlagebereich 182 kann ein ebenflächiger Abschnitt des Anschlagbocks 180 sein. Der Anlagebereich 182 und die Abdichtlippe 161 des horizontal verlaufenden Abdichtprofils 160 können so zueinander positioniert sein, dass die Abdichtlippe 161 an dem Anlagebereich 182 anliegt. Die Abdichtlippe 161 kann an dem Anlagebereich 182 im geöffneten und/oder im geschlossenen Zustand der Innenschwenktür 100 anliegen. Bevorzugt kann die Abdichtlippe 161 an dem Anlagebereich 182 anliegen, wenn die Innenschwenktür 100 von dem geöffneten Zustand in den geschlossenen Zustand übergeht und/oder wenn die Innenschwenktür 100 von dem geschlossenen Zustand in den geöffneten Zustand übergeht. Besonders bevorzugt liegt die Abdichtlippe 161 an dem Anlagebereich 182 unabhängig von dem Öffnungs- und Schließzustand der Innenschwenktür 100 an.

Der Anschlagbock 180 kann einen flexiblen Abschnitt 181 aufweisen. Der flexible Abschnitt 181 kann sich an den Anlagebereich 182 anschließen, insbesondere nach unten anschließen. Der flexible Abschnitt 181 kann nach unten ragen (in Gravitationsrichtung). Der flexible Abschnitt 181 kann elastisch sein. Insbesondere ragt zumindest ein Abschnitt des flexiblen Abschnitts 181 über eine Fläche oder Ebene, die von dem ersten Türblatt 120a oder dem zweiten Türblatt 120b im geschlossenen Zustand der Tür definiert ist, hinaus oder hindurch, wenn der flexible Abschnitt 181 unbelastet ist.

Das erste vertikal verlaufende Abdichtprofil 140a kann einen oberen Bereich 141a aufweisen. Im geschlossenen Zustand der Innenschwenktür 100 kann der obere Bereich 141a an dem flexiblen Abschnitt 181 anliegen. Durch den oberen Bereich 141a des ersten vertikal verlaufenden Abdichtprofils 140a kann der flexible Abschnitt 181 verformt oder komprimiert werden, insbesondere elastisch verformt oder komprimiert werden.

In Fig. 6 ist der flexible Abschnitt 181 in einem nicht-verformten oder nicht-komprimierten Zustand gezeigt. Wenn der flexible Abschnitt 181 verformt oder komprimiert wird, wird dieser in Richtung Innenraum gedrückt.

Der Anschlagbock 180 kann eine Wasserführungsstruktur 181a aufweisen. Die Wasserführungsstruktur 181a kann gegenüber einem Außenraum geöffnet sein. Der Außenraum kann sich auf der dem Innenraum gegenüberliegenden Seite des ersten Türblatts 120a und/oder des zweiten Türblatts 120b befinden. Die Wasserführungsstruktur 181a kann ausgebildet sein, um Wasser aufzunehmen. Beispielsweise kann Regenwasser von der Wasserführungsstruktur 181a aufnehmbar sein. Die Wasserführungsstruktur 181a kann eine Vertiefung aufweisen, in der das Wasser zumindest zeitweise aufbewahrt werden kann. Die Wasserführungsstruktur 181a kann rinnenförmig ausgebildet sein.

Bevorzugt ist an zumindest einem Ende der Wasserführungsstruktur 181a (in horizontaler Richtung) eine Öffnung ausgebildet. Durch die Öffnung kann Wasser aus der Wasserführungsstruktur 181a abgeleitet werden. Besonders bevorzugt weist die Wasserführungsstruktur 181a an beiden Enden (in horizontaler Richtung) jeweils eine Öffnung auf.

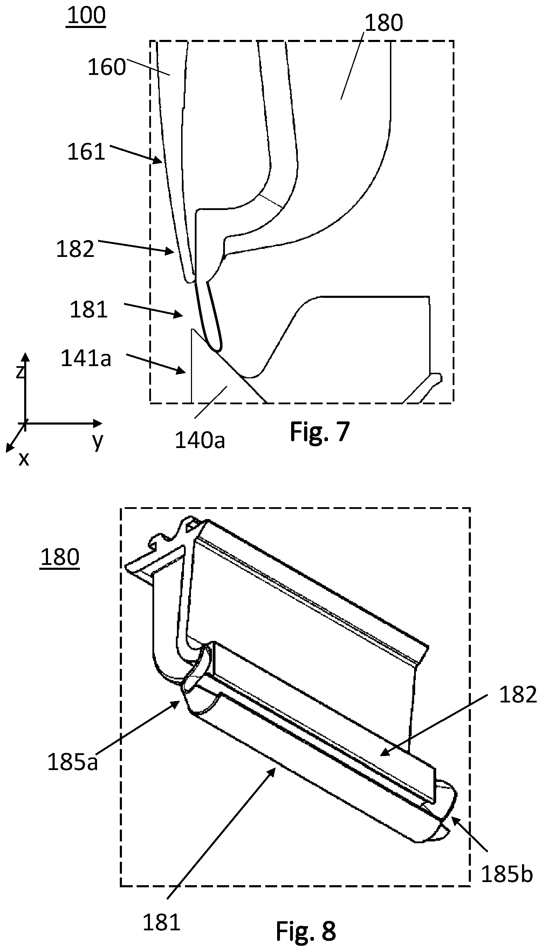

Fig. 7 zeigt eine ähnliche Darstellung wie Fig. 6. Die Innenschwenktür 100 umfasst das horizontal verlaufende Abdichtprofil 160 mit einer Abdichtlippe 161, den Anschlagbock 180 mit einem Anlagebereich 182 und einem flexiblen Abschnitt 181, und das erste vertikal verlaufende Abdichtprofil 140a mit einem oberen Bereich 141a.

Der flexible Bereich 181 ist in dieser Ausführungsform des Anschlagbocks 180 als Lippe oder Steg ausgeführt. Der flexible Bereich 181 kann sich im Wesentlichen (±10 % oder ±5 %) geradlinig nach unten erstrecken, wenn der flexible Bereich 181 unbelastet ist. Der Anschlagbock 180 dieser Ausführungsform umfasst bevorzugt keine Wasserführungsstruktur 181a.

Fig. 8 zeigt den Anschlagbock 180 in einer perspektivischen Ansicht. Der Anschlagbock 180 kann ein erstes seitliches Dichtelement 185a umfassen. Das erste seitliche Dichtelement 185a kann an einem ersten Ende des flexiblen Abschnitts 181 ausgebildet sein. Das erste Ende kann ein Ende in horizontaler Richtung sein. Der Anschlagbock 180 kann ein zweites seitliches Dichtelement 185b umfassen. Das zweite seitliche Dichtelement 185b kann an einem zweiten Ende des flexiblen Abschnitts 181 ausgebildet sein. Das erste Ende kann ein Ende in horizontaler Richtung sein.

An dem ersten seitlichen Dichtelement 185a kann ein Abschnitt des ersten Türblatts 120a (oder Rand des vertikalen Abdichtprofils 140a) anliegen, wenn die Innenschwenktür 100 geschlossen ist. An dem zweiten seitlichen Dichtelement 185b kann ein Abschnitt des zweiten Türblatts 120b (oder Rand des vertikalen Abdichtprofils 140b) anliegen, wenn die Innenschwenktür 100 geschlossen ist.

Das erste seitliche Dichtelement 185a kann (in horizontaler Richtung) von dem Anschlagbock 180 abragen, wenn das erste seitliche Dichtelement 185a unbelastet ist. Durch das Anliegen des Abschnitts des ersten Türblatts 120a kann das erste seitliche Dichtelement 185a komprimiert oder verformt werden. Das zweite seitliche Dichtelement 185b kann (in horizontaler Richtung) von dem Anschlagbock 180 abragen, wenn das zweite seitliche Dichtelement 185b unbelastet ist. Durch das Anliegen des Abschnitts des zweiten Türblatts 120b kann das zweite seitliche Dichtelement 185b komprimiert oder verformt werden.

Das erste seitliche Dichtelement 185a und/oder das zweite seitliche Dichtelement 185b können einstückig mit dem Anschlagbock 180 ausgebildet sein. Insbesondere besteht das erste seitliche Dichtelement 185a und/oder das zweite seitliche Dichtelement 185b aus dem gleichen Material wie der Anschlagbock 180.

Das erste seitliche Dichtelement 185a und/oder das zweite seitliche Dichtelement 185b können als Abschnitt eines Konus ausgebildet sein.

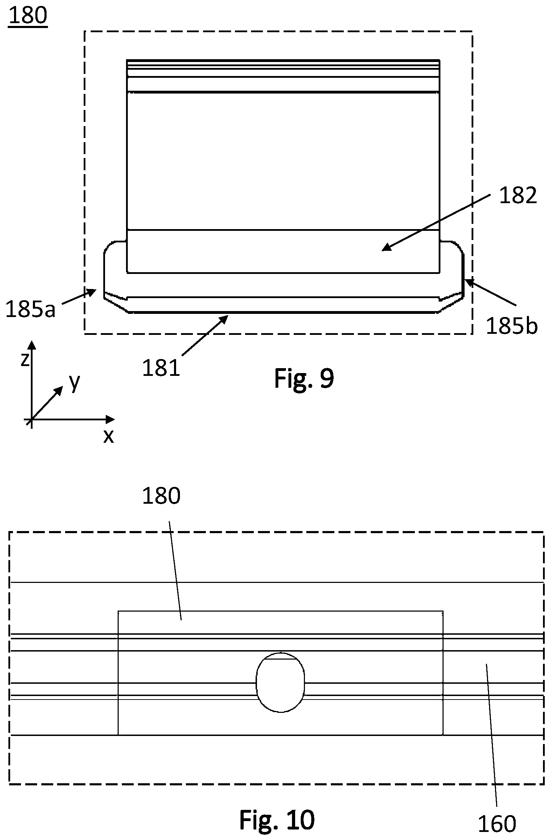

In Fig. 9 ist der Anschlagbock 180 in einer Vorderansicht gezeigt. Der Anschlagbock 180 kann einen Anlagebereich 182 aufweisen. In vertikaler Richtung kann sich ein flexibler Abschnitt 181 an den Anlagebereich 182 anschließen. Es ist auch möglich, dass bereits ein Teil des Anlagebereichs 182 flexibel ist und bei Anlage eines oberen Endes des vertikalen Abdichtprofils leicht nachgibt. Ein erstes seitliches Dichtelement 185a kann in horizontaler Richtung an dem Anschlagbock 180 ausgebildet sein, insbesondere an dem flexiblen Abschnitt 181 des Anschlagbocks 180 ausgebildet sein. Ein zweites seitliches Dichtelement 185b kann in horizontaler Richtung an dem Anschlagbock 180 ausgebildet sein, insbesondere an dem flexiblen Abschnitt 181 des Anschlagbocks 180.

Fig. 10 zeigt das horizontal verlaufende Abdichtelement 160 und den Anschlagbock 180 in einer Draufsicht von oben, d.h. in vertikaler Richtung. Der Anschlagbock 180 kann einstückig mit dem horizontal verlaufenden Abdichtelement 160 ausgebildet sein. Der Anlagebock 180 kann aus dem gleichen Material bestehen wie das horizontal verlaufende Abdichtelement 160.

Alternativ können der Anschlagbock 180 und das horizontal verlaufende Abdichtelement 160 als separate Elemente ausgebildet sein. Das horizontal verlaufende Abdichtelement 160 kann eine Ausnehmung aufweisen. In die Ausnehmung kann der Anschlagbock 180 eingesetzt werden. Der Anschlagbock 180 kann mit dem horizontal verlaufenden Abdichtelement 160 verbunden werden. Die Verbindung kann durch ein Verklemmen, Verrasten, Verkleben, Vulkanisation oder Verschrauben ausgestaltet werden.

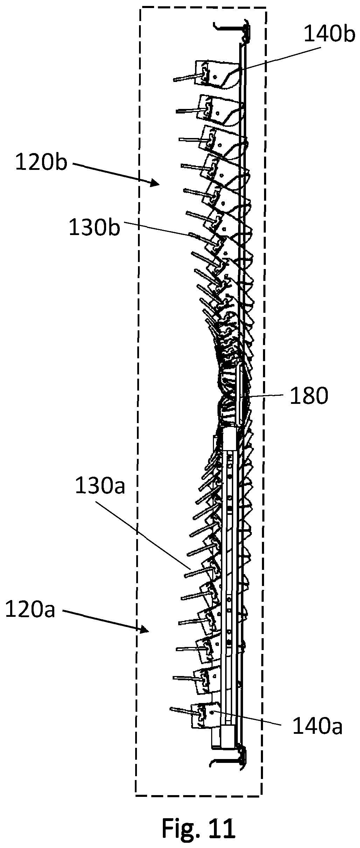

Fig. 11 zeigt Positionen des ersten Türblatts 120a und des zweiten Türblatts 120b zu unterschiedlichen Zeitpunkten während eines Schließ- oder Öffnungsvorgangs der Innenschwenktür 100.

Die Stellung des ersten Türblatts 120a am äußersten Ende (in Fig. 11 unten) und die Stellung des zweiten Türblatts 120b am äußersten Ende (in Fig. 11 oben) beschreiben die Positionen des ersten Türblatts 120a und des zweiten Türblatts 120b, wenn die Innenschwenktür 100 vollständig geöffnet ist. Die Stellung des ersten Türblatts 120a in der mittigen Position (in Fig. 11 in der Mitte) und die Stellung des zweiten Türblatts 120b in der mittigen Position (in Fig. 11 in der Mitte) beschreiben die Positionen des ersten Türblatts 120a und des zweiten Türblatts 120b, wenn die Innenschwenktür 100 vollständig geschlossen ist. Dazwischenliegende Stellungen des ersten Türblatts 120a und des zweiten Türblatts 120b beschreiben Positionen des ersten Türblatts 120a und des zweiten Türblatts 120b, wenn die Innenschwenktür 100 zwischen dem vollständig geöffneten und dem vollständig geschlossenen Zustand wechselt.

Wie in Fig. 11 ersichtlich, definieren das erste Türblatt 120a und/oder das zweite Türblatt 120b eine Fläche oder Ebene, wenn die Innenschwenktür 100 im geschlossenen Zustand vorliegt. Während des Öffnens und/oder während des Schließens der Innenschwenktür 100 ragt ein Abschnitt des ersten Türblatts 120a und/oder ein Abschnitt des zweiten Türblatts 120b durch die Fläche oder Ebene oder über die Fläche oder Ebene hinaus. Durch die Ausgestaltung des ersten und/oder zweiten vertikal verlaufenden Abdichtprofils 140a, 140b, findet kein Kontakt zwischen dem ersten und/oder zweiten vertikal verlaufenden Abdichtprofil 140, 140b und dem horizontal verlaufenden Abdichtelement 160 statt.

Fig. 12 zeigt einen Ausschnitt einer Innenschwenktür 100 im geschlossenen Zustand in einer Vorderansicht. Zwischen dem horizontal verlaufenden Abdichtelement 160 und dem ersten und/oder zweiten vertikal verlaufenden Abdichtprofil 140a, 140b kann ein Abstand s gebildet sein. Der Abstand s kann in vertikaler Richtung so ausgebildet sein, dass ein Spalt zwischen dem horizontal verlaufenden Abdichtelement 160 und dem ersten und/oder zweiten vertikal verlaufenden Abdichtprofil 140a, 140b vorhanden ist. Der Anschlagbock 180, insbesondere der flexible Abschnitt 181 des Anschlagbocks 180, kann an einem oberen Abschnitt des ersten und/oder zweiten vertikal verlaufenden Abdichtprofils 140a, 140b anliegen. Dadurch kann der Spalt zwischen dem horizontal verlaufenden Abdichtelement 160 und dem ersten und/oder zweiten vertikal verlaufenden Abdichtprofil 140a, 140b abgedichtet werden.

Fig. 13 zeigt einen Ausschnitt einer Innenschwenktür 100 im geschlossenen Zustand in einer Rückansicht, d.h. von innen. Der Anschlagbock 180 kann zumindest eine Rippe 186, bevorzugt zumindest zwei oder mehr Rippen umfassen. Die zumindest eine Rippe 186 kann sich im Wesentlichen (±10 % oder ±5 %) in vertikaler Richtung erstrecken. Die zumindest eine Rippe 186 kann auf einer Seite des Anschlagbocks 180 ausgebildet sein, die in Richtung des Innenraums gerichtet ist. Die zumindest eine Rippe 186 kann auf einer dem Anlagebereich 182 entgegengesetzten Seite des Anschlagbocks 180 ausgebildet sein. Die eine oder mehreren Rippen 186 dienen der Stabilität des Anschlagbocks 180.

Das erste seitliche Dichtelement 185a kann im geschlossenen Zustand der Innenschwenktür 100 an einem Abschnitt des ersten Türblatts 120a anliegen. Das zweite seitliche Dichtelement 185b kann im geschlossenen Zustand der Innenschwenktür 100 an einem Abschnitt des zweiten Türblatts 120b anliegen. Dadurch kann die Abdichtung des Innenraums bei geschlossener Innenschwenktür 120a verbessert werden.

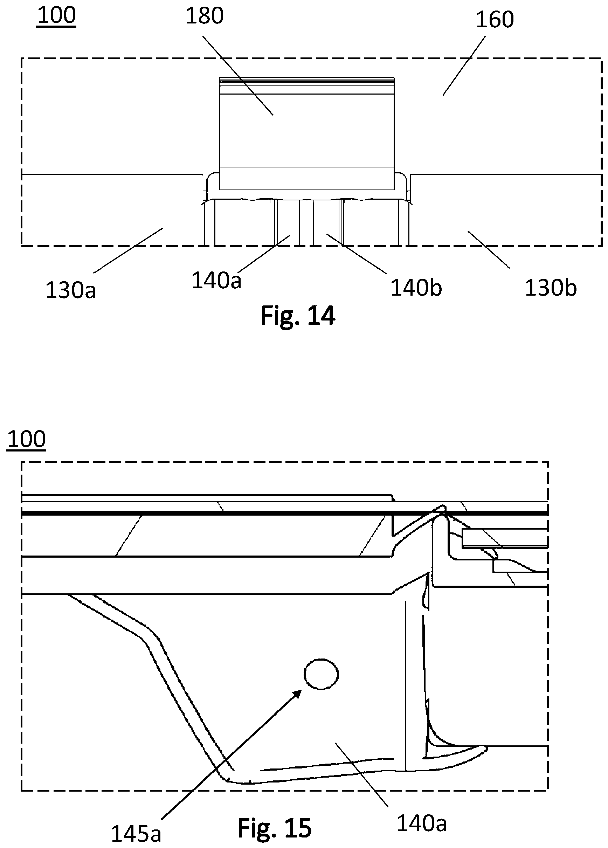

Fig. 14 zeigt einen Ausschnitt einer Innenschwenktür 100 im geschlossenen Zustand in einer Vorderansicht. Die Darstellung der Fig. 14 ist ähnlich zur Darstellung der Fig. 12, wobei gegenüber der Fig. 12 ein Teil des horizontal verlaufenden Abdichtelements 160 nicht dargestellt ist.

Fig. 15 zeigt einen Ausschnitt einer Innenschwenktür 100 in einer Draufsicht. In einem oberen Bereich (entgegen der Gravitationsrichtung) des ersten vertikal verlaufenden Abdichtprofils 140a kann eine Vertiefung ausgebildet sein. Die Vertiefung kann wannenförmig oder trichterförmig ausgestaltet sein. In dem oberen Bereich des ersten vertikal verlaufenden Abdichtprofils 140a kann eine Wassereinfuhrstruktur 145a ausgebildet sein. Die Wassereinfuhrstruktur 145a kann eine Öffnung sein. Die Wassereinfuhrstruktur 145a kann ein Eingang zu einem Kanal in das erste vertikal verlaufende Abdichtprofil 140a sein. Der Kanal kann sich zumindest abschnittsweise, insbesondere vollständig, durch das erste vertikal verlaufende Abdichtprofil 140a erstrecken.

In den oberen Bereich des ersten vertikal verlaufenden Abdichtprofils 140a kann Wasser einbringbar sein. Beispielsweise kann Wasser aus der Wasserführungsstruktur 181a des Anschlagbocks 180 in den oberen Bereich des ersten vertikal verlaufenden Abdichtprofils 140a einbringbar sein. Durch die Wassereinfuhrstruktur 145a kann das Wasser in das erste vertikal verlaufende Abdichtprofil 140a überführt werden, insbesondere in den Kanal in dem ersten vertikal verlaufenden Abdichtprofil 140a. Aus dem Kanal kann das Wasser aus dem ersten vertikal verlaufenden Abdichtprofil 140a ausbringbar oder ausleitbar sein.

Wie oben beschrieben, kann das erste und/oder zweite vertikal verlaufende Abdichtprofil 140a, 140b zumindest zweistückig ausgebildet sein oder genau zweistückig ausgebildet sein. Der obere Bereich kann dem zweiten Abschnitt entsprechen. Insbesondere umfasst der zweite Abschnitt die Vertiefung und/oder die Wassereinfuhrstruktur 145a.

### BEZUGSZEICHENLISTE

- 100: Innenschwenktür
- 100p: Innenschwenktür
- 120a, 120b: Türblatt
- 130a, 130b: Türblattelement
- 140a, 140b: Abdichtprofil
- 141a: oberer Bereich Abdichtprofil
- 145a: Wassereinfuhrstruktur
- 150: Portal
- 160: Abdichtelement
- 160p: Abdichtelement
- 161: Abdichtlippe
- 161p: Ausbeulung
- 180: Anschlagbock
- 181: Abschnitt
- 181a: Wasserführungsstruktur
- 182: Anlagebereich
- 185: Dichtelement
- 186: Rippe

## Patentansprüche

1. Innenschwenktür (100), vorzugsweise für ein Fahrzeug, umfassend:
- ein Türblatt (120a, 120b) und
- ein Portal (150), in dem von dem Türblatt (120a, 120b) eine in einen Innenraum schwenkende Bewegung ausführbar ist, um den Innenraum zu öffnen oder zu schließen,
- wobei das Türblatt (120a, 120b) wenigstens teilweise bei der schwenkenden Bewegung über eine vom Portal (150) und dem Türblatt (120a, 120b) im geschlossenen Zustand gebildete Fläche hinausfährt, wobei das Portal (150) ein im oberen Bereich horizontal verlaufendes Abdichtelement (160) aufweist, das im geschlossenen Zustand der Innenschwenktür (100) einen oberen Bereich des Türblatts (120a, 120b) überlagert,
- wobei das Türblatt (120a, 120b) wenigstens ein Türblattelement (130a, 130b) und wenigstens ein vertikal verlaufendes Abdichtprofil (140a, 140b) aufweist, welches am Türblattelement (130a, 130b) befestigt ist und im geschlossenen Zustand an einem anderen Abdichtprofil (140b, 140a) oder an dem Portal (150) zum Anliegen kommt,
- **dadurch gekennzeichnet, dass** das vertikal verlaufende Abdichtprofil (140a, 140b) eine geringere Höhe aufweist als das Türblattelement (130a, 130b), so dass das vertikal verlaufende Abdichtprofil (140a, 140b) bei einer schwenkenden Bewegung des Türblatts (120a, 120b) unter dem horizontal verlaufenden Abdichtelement (160) hindurchfährt, ohne das horizontal verlaufende Abdichtelement (160) zu berühren.

2. Innenschwenktür nach Anspruch 1, wobei die Innenschwenktür (100) einen Anschlagbock (180) umfasst, wobei eine Abdichtlippe (161) des horizontal verlaufenden Abdichtelements (160) an dem Anschlagbock (180) anliegt, bevorzugt im geschlossenen Zustand der Innenschwenktür (100), bevorzugter sowohl im geschlossenen Zustand der Innenschwenktür (100) als auch im geöffneten Zustand der Innenschwenktür (100).

3. Innenschwenktür nach Anspruch 2, wobei der Anschlagbock (180) einen Anlagebereich (182) aufweist, an dem die Abdichtlippe (161) des horizontal verlaufenden Abdichtelements (160) im geschlossenen und/oder geöffneten Zustand der Innenschwenktür (100) anliegt.

4. Innenschwenktür nach Anspruch 3, wobei sich unterhalb des Anlagebereichs (182) ein flexibler nach unten ragender Abschnitt (181) des Anschlagblocks (180) erstreckt, an dem ein oberer Bereich (141a) des vertikal verlaufenden Abdichtprofils (140a) im geschlossenen Zustand der Innenschwenktür (100) anliegt.

5. Innenschwenktür nach einem der Ansprüche 2 bis 4, wobei der Anschlagbock (180) zwischen einem linken und einem rechten Bereich des horizontal verlaufenden Abdichtelements (160) eingesetzt ist, insbesondere wobei der Anschlagbock (180) bezogen auf die horizontale Erstreckung des horizontal verlaufenden Abdichtelements (160) im Wesentlichen mittig angeordnet ist.

6. Innenschwenktür nach einem der Ansprüche 2 bis 5, wobei der Anschlagbock (180) eine, insbesondere im Wesentlichen horizontal verlaufende, Wasserführungsstruktur (181a) aufweist, um eintretendes Wasser aufzufangen und seitlich vom Anschlagbock (180) abzuleiten.

7. Innenschwenktür nach Anspruch 6, wobei die Wasserführungsstruktur (181a) in einem oder dem Abschnitt (181) des Anschlagblocks (180) ausgebildet ist, der sich unterhalb eines oder des Anlagebereichs (182) flexibel nach unten ragend erstreckt.

8. Innenschwenktür nach einem der Ansprüche 2 bis 7, wobei der Anschlagbock (180) zumindest ein seitliches Dichtelement (185) aufweist, wobei das seitliche Dichtelement (185) im geschlossenen Zustand der Innenschwenktür (100) zumindest teilweise komprimiert oder verformt ist.

9. Innenschwenktür nach einem der Ansprüche 2 bis 8, wobei der Anschlagbock (180) einen Kunststoff umfasst oder aus einem Kunststoff besteht, insbesondere wobei der Anschlagblock (180) aus dem gleichen Material wie das horizontal verlaufende Abdichtelement (160) besteht oder aus einem Kunststoff besteht, der härter als das horizontal verlaufende Abdichtelement (160) ist.

10. Innenschwenktür nach einem der vorhergehenden Ansprüche, wobei das vertikal verlaufende Abdichtprofil (140a, 140b) im oberen Bereich eine Wassereinfuhrstruktur (145a) aufweist.

11. Innenschwenktür nach einem der vorhergehenden Ansprüche, wobei das Türblattelement (130a, 130b) Glas umfasst oder zu zumindest 50 Gew.-% aus Glas besteht.

12. Innenschwenktür nach einem der vorhergehenden Ansprüche, wobei das horizontal verlaufende Abdichtelement (160) und/oder das vertikal verlaufende Abdichtprofil (140a, 140b) ein Elastomer umfassen oder aus einem Elastomer bestehen.

13. Innenschwenktür nach einem der vorhergehenden Ansprüche, wobei das Türblatt (120a, 120b) mit einem Türblattantrieb gekoppelt ist.

14. Innenschwenktür nach einem der vorhergehenden Ansprüche, wobei das Türblatt (120a) ein erstes Türblatt ist, das Türblattelement (130a) ein erstes Türblattelement ist und das vertikal verlaufende Abdichtprofil (140a) ein erstes vertikal verlaufendes Abdichtprofil ist, wobei die Innenschwenktür (100) ein zweites Türblatt (120b) mit einem zweiten Türblattelement (130b) und einem zweiten vertikal verlaufenden Abdichtprofil (140b) umfasst.

15. Fahrzeug, insbesondere Nutzfahrzeug, mit einer Innenschwenktür (100) nach einem der vorhergehenden Ansprüche.

## Claims

1. Interior swing door (100), preferably for a vehicle, comprising:
- a door panel (120a, 120b) and
- a portal (150) in which a swinging motion into an interior is executable by said door panel (120a, 120b) to open or close said interior,
- wherein said door panel (120a, 120b), in said swinging motion, at least partly travels beyond an area formed by said portal (150) and said door panel (120a, 120b) in the closed state, wherein said portal (150) comprises a sealing member (160) horizontally extending in an upper area, which overlies, in the closed state of said interior swing door, (100) an upper area of said door panel (120a, 120b),
- wherein said door panel (120a, 120b) comprises at least one door panel element (130a, 130b) and at least one vertically extending sealing profile (140a, 140b) which is mounted at said door panel element (130a, 130b) and comes to rest against a different sealing profile (140b, 140a) or against said portal (150) in the closed state,
- **characterized in that**
said vertically extending sealing profile (140a, 140b) has a height lower than a height of said door panel element (130a, 130b), so that said vertically extending sealing profile (140a, 140b), during a swinging motion of said door panel (120a, 120b), travels underneath said horizontally extending sealing member (160) without contacting said horizontally extending sealing member (160).

2. The interior swing door of claim 1, wherein said interior swing door (100) comprises a stop bracket (180), wherein a sealing lip (161) of said horizontally extending sealing member (160) abuts said stop bracket (180), preferably in the closed state of said interior swing door (100), more preferably both in the closed state of said interior swing door (100) and in the opened state of said interior swing door (100).

3. The interior swing door of claim 2, wherein said stop bracket (180) comprises an abutment area (182) which said sealing lip (161) of said horizontally extending sealing member (160) abuts in said closed and/or opened state of said interior swing door (100).

4. The interior swing door of claim 3, wherein a flexible downwards protruding section (181) of said stop block (180), which an upper area (141a) of said vertically extending sealing profile (140a) abuts in the closed state of said interior swing door (100), extends below said abutment area (182).

5. The interior swing door according to any one of claims 2 to **4,** wherein said stop bracket (180) is inserted between a left and right area of said horizontally extending sealing member (160), in particular wherein said stop bracket (180) is arranged substantially centered in relation to said horizontal extension of said horizontally extending sealing member (160).

6. The interior swing door according to any one of claims 2 to 5, wherein said stop bracket (180) comprises a water guide structure (181a) particularly extending substantially horizontally, to collect and laterally drain off entering water from said stop bracket (180).

7. The interior swing door of claim 6, wherein said water guide structure (181a) is formed in a or said portion (181) of said stop block (180) which extends flexibly protruding downwards below an or said abutment area (182).

8. The interior swing door according to any one of claims 2 to 7, wherein said stop bracket (180) comprises at least one lateral seal member (185), said lateral seal member (185) being at least partly compressed or deformed in the closed state of said interior swing door (100).

9. The interior swing door according to any one of claims 2 to 8, wherein said stop bracket (180) comprises plastic or consists of plastic, particularly wherein said stop block (180) consists of the same material as that of said horizontally extending sealing member (160) or consists of plastic that is harder than that of said horizontally extending sealing member (160).

10. The interior swing door according to any one of the previous claims, wherein said vertically extending sealing profile (140a, 140b) comprises, in the upper area, a water introduction structure (145a).

11. The interior swing door according to any one of the previous claims, wherein said door panel element (130a, 130b) comprises glass or consists of glass by at least 50 % by weight.

12. The interior swing door according to any one of the previous claims, wherein said horizontally extending sealing member (160) and/or said vertically extending sealing profile (140a, 140b) comprise elastomer or consist of elastomer.

13. The interior swing door according to any one of the previous claims, wherein said door panel (120a, 120b) is coupled to a door panel drive.

14. The interior swing door according to any one of the previous claims, wherein said door panel (120a) is a first door panel, said door panel element (130a) is a first door panel element, and said vertically extending sealing profile (140a) is a first vertically extending sealing profile, said interior swing door (100) comprising a second door panel (120b) with a second door panel element (130b) and a second vertically extending sealing profile (140b).

15. A vehicle, especially a utility vehicle, with an interior swing door (100) according to any one of the previous claims.

## Revendications

1. Porte pivotante intérieure (100), de préférence pour un véhicule, comprenant :
- un panneau de porte (120a, 120b) et
- un portique (150) dans lequel un mouvement de pivotement dans un espace intérieur peut être réalisé par le panneau de porte (120a, 120b) pour ouvrir ou fermer l'espace intérieur,
- dans laquelle le panneau de porte (120a, 120b) se déplace, pendant le mouvement de pivotement, au moins partiellement au-delà d'une surface formée par le portique (150) et le panneau de porte (120a, 120b) à l'état fermé, dans laquelle le portique (120) comporte un élément d'étanchéité (160) s'étendant horizontalement dans la zone supérieure qui, à l'état fermé de la porte pivotante intérieure (100), recouvre une zone supérieure du panneau de porte (120a, 120b),
- dans laquelle le panneau de porte (120a, 120b) comporte au moins un élément de panneau de porte (130a, 130b) et au moins un profilé d'étanchéité (140a, 140b) s'étendant verticalement qui est fixé à l'élément de panneau de porte (130a, 130b) et qui, à l'état fermé, vient en appui sur un autre profilé d'étanchéité (140b, 140a) ou sur le portique (150),
- **caractérisée en ce que**
le profilé d'étanchéité (140a, 140b) s'étendant verticalement a une hauteur inférieure à celle de l'élément de panneau de porte (130a, 130b), de telle sorte que le profilé d'étanchéité (140a, 140b) s'étendant verticalement se déplace sous l'élément d'étanchéité (160) s'étendant horizontalement lors d'un mouvement de pivotement du panneau de porte (120a, 120b), sans entrer en contact avec l'élément d'étanchéité (160) s'étendant verticalement.

2. Porte pivotante intérieure selon la revendication 1, **caractérisée en ce que** la porte pivotante intérieure (100) comprend un support d'arrêt (180), dans laquelle une lèvre d'étanchéité (161) de l'élément d'étanchéité (160) s'étendant horizontalement vient en butée contre le support d'arrêt (180), de manière préférée à l'état fermé de la porte pivotante intérieure (100), de manière plus préférée aussi bien à l'état fermé de la porte pivotante intérieure (100) qu'à l'état ouvert de la porte pivotante intérieure (100).

3. Porte pivotante intérieure selon la revendication 2, **caractérisée en ce que** le support d'arrêt (180) comporte une zone de butée (182) contre laquelle la lèvre d'étanchéité (161) de l'élément d'étanchéité (160) s'étendant horizontalement vient en butée à l'état fermé et/ou ouvert de la porte pivotante intérieure (100).

4. Porte pivotante intérieure selon la revendication 3, dans laquelle une partie souple (181) du support d'arrêt (180) faisant saillie vers le bas s'étend en dessous de la zone de butée (182), portion souple contre laquelle une zone supérieure (141a) du profilé d'étanchéité (140a) s'étendant verticalement vient en butée à l'état fermé de la porte pivotante intérieure (100).

5. Porte pivotante intérieure selon l'une des revendications 2 à 4, dans laquelle le support d'arrêt (180) est inséré entre une zone gauche et une zone droite de l'élément d'étanchéité (160) s'étendant horizontalement, en particulier dans laquelle le support d'arrêt (180) est agencé sensiblement au centre par rapport à l'extension horizontale de l'élément d'étanchéité (160) s'étendant horizontalement.

6. Porte pivotante intérieure selon l'une des revendications 2 à 5, dans laquelle le support d'arrêt (180) comporte une structure de guidage d'eau (181a), s'étendant en particulier de manière sensiblement horizontale, pour recueillir l'eau entrante et l'évacuer latéralement à partir du support d'arrêt (180).

7. Porte pivotante intérieure selon la revendication 6, dans laquelle la structure de guidage d'eau (181a) est formée dans une ou la partie (181) du support d'arrêt (180) qui s'étend de manière souple en faisant saillie vers le bas en dessous d'une ou de la zone de butée (182).

8. Porte pivotante intérieure selon l'une des revendications 2 à 7, dans laquelle le support d'arrêt (180) comporte au moins un élément d'étanchéité latéral (185), dans laquelle l'élément d'étanchéité latéral (185) est au moins partiellement comprimé ou déformé à l'état fermé de la porte pivotante intérieure (100).

9. Porte pivotante intérieure selon l'une des revendications 2 à 8, dans laquelle le support d'arrêt (180) comprend une matière plastique ou est constitué d'une matière plastique, en particulier dans laquelle le support d'arrêt (180) est constitué du même matériau que l'élément d'étanchéité (160) s'étendant horizontalement ou est constitué d'une matière plastique qui est plus dure que celle de l'élément d'étanchéité (160) s'étendant horizontalement.

10. Porte pivotante intérieure selon l'une des revendications précédentes, dans laquelle le profilé d'étanchéité (140a, 140b) s'étendant verticalement comporte une structure d'introduction d'eau (145a) dans la zone supérieure.

11. Porte pivotante intérieure selon l'une des revendications précédentes, dans laquelle l'élément de panneau de porte (130a, 130b) comprend du verre ou au moins 50 % en poids de verre.

12. Porte pivotante intérieure selon l'une des revendications précédentes, dans laquelle l'élément d'étanchéité (160) s'étendant verticalement et/ou le profilé d'étanchéité (140a, 140b) s'étendant verticalement comprennent un élastomère ou sont constitués d'un élastomère.

13. Porte pivotante intérieure selon l'une des revendications précédentes, dans laquelle le panneau de porte (120a, 120b) est couplé à un entraînement de panneau de porte.

14. Porte pivotante intérieure selon l'une des revendications précédentes, dans laquelle le panneau de porte (120a) est un premier panneau de porte, l'élément de panneau de porte (130a) est un premier élément de panneau de porte et le profilé d'étanchéité (140a) s'étendant verticalement est un premier profilé d'étanchéité s'étendant verticalement, dans laquelle la porte pivotante intérieure (100) comprend un second panneau de porte (120b) comportant un second élément de panneau de porte (130b) et un second profilé d'étanchéité (140b) s'étendant verticalement.

15. Véhicule, en particulier véhicule utilitaire, ayant une porte pivotante intérieure (100) selon l'une des revendications précédentes.
